# EUROPEAN PATENT APPLICATION

(11) **EP 3 992 505 A1**
(43) Date of publication of application: **04.05.2022**
(21) Application number: 21199108.8
(22) Date of filing: 27.09.2021
(51) Int. Cl.: F16K 31/04, F16K 31/50, F16K 37/00

(54) **APPARATUS FOR CONTROLLING A VALVE**

(30) Priority: 29.10.2020 DE 102020128530
(71) Applicant: Advanced Mechatronics GmbH, 73460 Hüttlingen (DE)
(72) Inventor: Schmid, Linus, 73102 Birenbach (DE); Schick, Johannes, 71364 Winnenden (DE)
(74) Representative: Schmid, Wolfgang

(57) **Abstract**

An apparatus (5) for controlling a valve (1), the valve (1) having a valve stem (4), in particular in a subsea environment, comprises:
an actuator (6) having an electric motor (8),
a gear unit (9) for converting a rotational movement generated by the electric motor (8) into a linear movement for driving the valve stem (4),
at least one control device (7) for controlling the electric motor (8), the at least one control device (7) having a battery (16) for the electrical emergency supply thereof and for the electrical emergency supply of the electric motor (8).

## Description

The invention relates to an apparatus for controlling a valve, the valve having a valve stem, in particular in a subsea environment.

Such an apparatus may be used in a subsea environment, in particular in a gas field in a depth where a compressor is needed to pump the gas from the bottom of the sea to the surface. While moving the gas compression from the platform to the wellhead increases the recovery rate and the field life, an anti-surge control valve is placed in a bypass-line and is required to guarantee the intactness of the compressor. This anti-surge control valve should be fast to open and highly reliable. Furthermore, the valve is also used in a high integrity pressure protection system (HIPPS), which is designed to prevent over-pressurization of the subsea system. As known, the HIPPS shuts off the high-pressure source before the design pressure of the system is exceeded and therefore protects the pipeline from over pressurization via the failsafe close valve that closes as soon as the pressure exceeds a set point.

WO 2006/071124 A1 relates to an anti-surge actuator for actuating a valve in a subsea environment. The actuator has two motors, one for moving a valve element and a second for energizing a failsafe spring.

EP 3 052 746 B1 relates to an actuator for controlling a valve in a subsea installation, the valve having a spring to return the valve to a failsafe condition upon loss of pressure. The actuator comprises an actuator module that is exchangeable connected to the valve and comprises a cylinder with a movable piston, a fluid pump operatively connected to the hydraulic cylinder and being adapted to supply fluid through a first hydraulic line operatively connected between said hydraulic cylinder and said pump, and a second hydraulic line providing a fluid passage between the first hydraulic line and a reservoir. A bypass control unit is located in the second hydraulic line and comprises a movable element operating to open or close said fluid passage through the second hydraulic line providing a failsafe function to the valve. A third hydraulic line is connected to the second hydraulic line and acts on the movable element, forcing the control unit towards opening said passage.

In WO 2019/166789 A1 a subsea control module, comprising a housing with a subsea electronics module and a logging device is described. The logging device comprises a battery, a microprocessor and a memory device. The subsea module comprises a plurality of different sensors connected to or within the logging device, and outside the subsea electronics module. The sensors include at least one pressure sensor, a temperature sensor and a shock sensor.

WO 2019/245697A1 discloses an actuator mechanism for a valve system which includes a housing having an outer surface, an inner surface defining an opening and a chamber extending partially about the housing between the outer surface and the inner surface. A hinge is mounted to the housing and is exposed at the chamber. A valve member is fixedly connected to the hinge and is selectively positionable across the opening. An actuator is arranged in the chamber and selectively biased against the hinge to transition the valve member between an open configuration and a closed configuration.

An actuator device comprising an actuator housing with a fitting for connecting the actuator to an object is known from EP 2 041 463 B1. A motor drives an output actuator shaft of the actuator, the actuator shaft being rotationally disconnectable from the motor and being rotatable between two angular positions where the one angular position corresponds to the object being in a first condition and the other angular position corresponds to the object being in a second condition. The actuator is provided with an element for storage of mechanical energy, which by energy cut-off to the actuator is releasably arranged to be able to displace a nut being prevented from rotating around its longitudinal axis, along a screw thread complementary fitting to the nut, and connected to the actuator shaft, whereby the actuator shaft is rotated between the two angular positions.

A further valve actuator is known from US 9,151,403 B1 and has a movable control element which is typically connected to the valve to be opened or closed and a hydraulically operated piston for moving the movable control element. A resilient element in the form of a spring has a stroke extending from a first relatively unloaded position to a second relatively loaded position and a transmission mechanism. The resilient element is loaded under the action of the propulsion device via the transmission mechanism and is configured to urge the moveable portion of the propulsion device towards the first position via the transmission mechanism when loaded. The transmission mechanism provides a gearing ratio reduction between the moveable portion of the propulsion device and the resilient element.

US 5,984,260 discloses a valve actuator driven by an electric motor, which is used with surface safety valves and uses power input from an electric motor to position the valve in its normal position. A mechanism allows the valve to shift positions to a failsafe position upon failure of electrical power to the motor connected to the actuator. A screw drive is provided with the motor, with a latch mechanism holding a nut against rotation. The nut can advance longitudinally upon rotation of the drive to move a valve stem. Upon failure of electrical power, the latch mechanism releases the nut from a coupling in the actuator which is connected to the valve stem, and the main return springs in the actuator allow the nut to rotate with respect to the screw drive so that the valve can assume its failed position. While normal applications allow the valve to fail closed, the valve can be configured so that failure results in opening of the valve if the application requires it.

GB 2 472 475 A refers to a subsea control system including a control module which has at least two dual ball valve assemblies. Each dual ball valve assembly is connected to a supply line, a vent line, and a function line connected to a subsea device for controlling the subsea device.

To be able to act as a failsafe actuator, most of these known actuators use a mechanical spring to open the valve in an emergency. However, these springs have to produce a large force to be able to move the valve stem. This mostly results in a very large and heavy spring resulting in an equally large and heavy actuator. It also requires mechanical braking devices to hold the spring open and close when power is interrupted. A mechanical spring is difficult to monitor and diagnose in such a system which increases the probability of failure on demand significantly.

It is therefore an object of the present invention to provide an apparatus for controlling a valve, in particular in a subsea environment, which is very reliable and can be realized with small dimensions.

According to the present invention, this object is solved by the features stated in claim 1.

According to the present invention, a battery is provided in the at least one control device. This makes it possible to supply the electric motor contained in the actuator and intended to drive the valve with electrical power even in situations where an external power supply is interrupted or not available. This results in a very high level of safety for the apparatus according to the invention. This high safety level of the apparatus also results from the fact that the battery can be constantly monitored in contrast to, for example, a spring as used in known solutions. If the input voltage to supply the electric motor is lost, the battery takes over the power supply and thus ensures that the valve can still be operated into its fail safe position in any state of the apparatus, thus protecting the compressor or pipeline or another device the valve is interacting with from damage and keeping it within its safe operational limits.

Furthermore, the apparatus according to the present invention allows the valve to be used in a HIPPS-system, which forms a barrier between the high-pressure and the low-pressure section of the subsea installation.

Using the battery as a power supply for the electric motor does not have any negative impact on the high speed the electric motor can attain. In this respect, the battery can also be used as a general voltage source for the electric motor. In this case, the input voltage could recharge the battery.

The solution according to the invention does not use springs, clutches or similar mechanical components, which makes the whole apparatus very compact. This does not only simplify the installation, which usually is very time-consuming in the case of subsea applications, but also a potential repair, since the individual components are much easier to access than is the case with known solutions. Furthermore, no clutches or other similar mechanical components are necessary to keep the spring under tension.

The actuator as well as the at least one control device can be firmly connected to the valve which enhances the safety of the apparatus according to the present invention.

The at least one control device is very easy to dismantle from the valve, as it has a relatively low weight and a small volume. Furthermore, in case of a failure and a necessary repair they are easy to access, e.g. by means of a diving robot.

In a very advantageous embodiment of the invention, the apparatus may comprise at least two control devices for controlling the electric motor, the control devices being connected to each other. This results in a redundant operation of the electric motor by means of the at least two control devices that can communicate with each other, so that in case of failure of one of the control devices, the other control device can take over the control of the electric motor or the actuator. Redundancy can be used for availability as well as for safety. Furthermore, it is also possible to use three or even more control devices. The use of three control devices would allow one redundancy for availability and one redundancy for safety.

If, according to a further embodiment of the present invention, the electric motor is a at least a dual channel motor having a separate winding for each channel, it is particularly simple to control the electric motor in case of a failure, since both channels of the electric motor may be controlled separately. Accordingly, in order to increase the safety of the electric motor, each of the at least two control devices may be connected to one channel of the electric motor. Furthermore, each of the two motor channels can again be subdivided to safely avoid exceedance of the ampacity of the connectors.

In another embodiment of the invention the actuator can comprise two separate oil volumes separated by a seal, and at least one compensator can be provided, the at least one compensator having at least two separate volumes separated by at least one bladder and being connected to one of the oil volumes of the actuator respectively, or two compensators being provided, each of the two compensators having at least one bladder and being connected to one of the oil volumes of the actuator respectively. This enhances the reliability of the apparatus due to an improved fault tolerance.

If, according to a further embodiment of the invention, the electric motor has a predetermined cogging moment which can be used as a brake momentum to currentlessly hold a desired position of the electric motor, the control of the valve may be simplified.

In order to be able to determine the position of the electric motor and the valve stem at any given moment, the actuator may comprise a sensor for sensing the rotational position of a rotor of the electric motor and/or a sensor for sensing the linear position of the valve stem.

A further advantageous embodiment of the invention may be that the at least one control device comprises a logic controller, a power amplifier, an actuator interface, an input power module, and the battery. Such a control device enables an optimal control of the electric motor or the actuator.

A safe guidance for the valve stem can be achieved, if the apparatus has anti-rotation means for preventing the rotation of the valve stem.

Another advantageous embodiment according to the invention may be that the gear unit is a ball screw spindle, a roller screw spindle or a threaded spindle. Such a ball screw spindle has a high efficiency and low wear and is therefore very well suited for underwater applications. A further advantage of the ball screw spindle is the transmission ratio that can be achieved, which, in contrast to other solutions, allows a comparatively low motor speed. In certain applications, a threaded spindle might be advantageous.

In order to protect the valve stem and the valve equipped therewith, the apparatus may comprise at least one adjustable end-stop to limit the linear movement of the valve stem.

Exemplary embodiments of the invention are described in more detail below with reference to the drawings. The figures show preferred exemplary embodiments in which individual features of the present invention are illustrated in combination with one another.

In the drawings:
- Fig. 1: is a principle representation of an apparatus according to the present invention in a subsea environment;
- Fig. 2: shows an apparatus according to the present invention having an actuator and two control devices;
- Fig. 3: is an enlarged view of the actuator from Fig. 2;
- Fig. 4: is an enlarged view of the connection of the valve stem with the electric motor;
- Fig. 5: is a detailed representation of the apparatus according to the present invention in a perspective view;
- Fig. 6: is a sectional view of a detail of the apparatus according to the invention;
- Fig. 7: is a detailed presentation of the input power module; and
- Fig. 8: is a detailed presentation of the power amplifier.

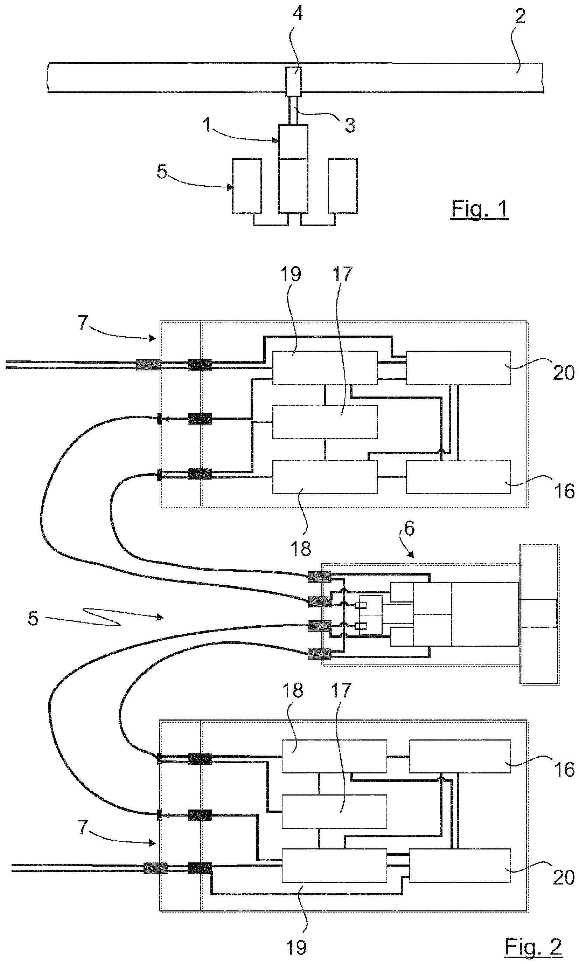

Fig. 1 shows in a very schematic manner a valve 1, which is used to open and close a line 2, in particular a gas line, particularly in a subsea environment. Line 2 can be used to bypass a compressor of a subsea arrangement not shown in the drawings. The compressor is used to pump the gas from the bottom of the sea to the surface. To close line 2, valve 1 has a closing element 3, which is attached to one end of a valve stem 4 of valve 1. Movement of the valve stem 4 moves closing element 3 and therefore changes the free cross-section of line 2. Valve 1 is controlled by an apparatus 5, which is described in more detail below, and the main components of which are shown in Fig. 2.

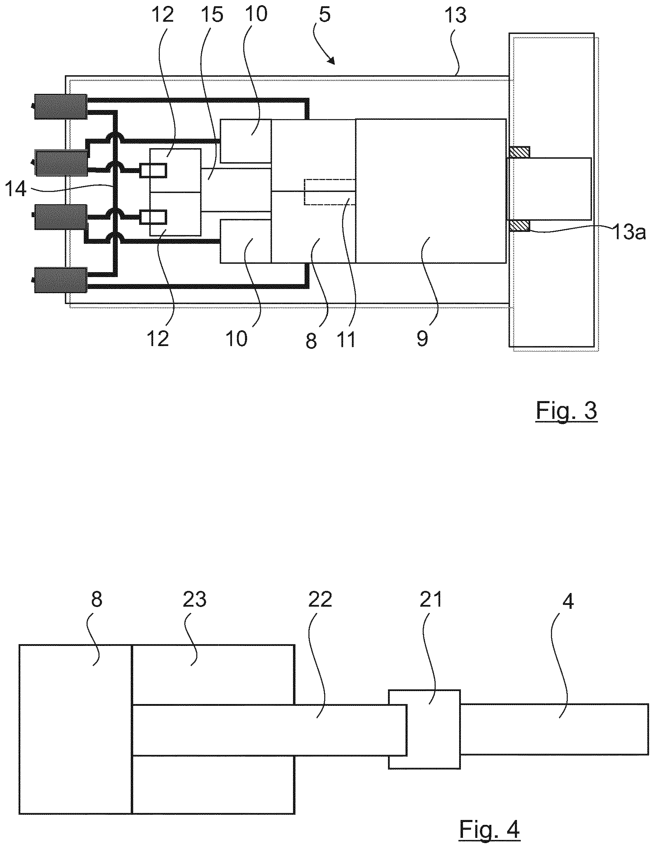

Apparatus 5 has an actuator 6, which is connected to two control devices 7 and is controlled by these control devices 7. While the constructional details of the two control devices 7 will be described later with reference to Fig. 2, the actuator 6 will be described in more detail with reference to Fig. 3. Actuator 6 has an electric motor 8 to drive valve stem 4. Between electric motor 8 and valve stem 4 there is provided a gear unit 9, which converts the rotational movement generated by electric motor 8 into a linear movement. In the present embodiment, gear unit 9 is a ball screw spindle, but could also be a roller screw spindle or a threaded spindle or power spindle or lead spindle.

Furthermore, actuator 6 comprises a sensor 10 for sensing the rotational position of a rotor 11 of electric motor 8 and a sensor 12 for sensing the linear position of the valve stem 4. While sensor 10 is a rotative sensor which directly measures the rotational position of rotor 11, the operating mode of sensor 12 is explained at a later stage. Sensors 10 and 12 are connected by means of an inter-channel communication 14. Rotor 11 of electric motor 8 is sealed against a housing 13 of the actuator 6 by means of a sealing 13a.

As is known to the expert, electric motor 8 has a magnetic cogging torque. Usually, attempts are made to minimize this cogging torque. In the present case, however, the magnetic cogging torque is specifically adjusted, preferably increased. This results in a braking momentum for rotor 11, which allows a desired position of the rotor 11 and thus of the valve stem 4 to be held without current.

The electric motor 8 is at least a dual channel motor, i.e. it has at least two channels, with one separate winding for each channel. In the present embodiment, each of the two control devices 7 is connected to a channel or winding of the electric motor 8. The two channels can be used in a flexible manner in a 1002 or 1001 configuration by means of inter-channel communication 14. The electric motor 8 may have even more than two channels, e.g. four channels. This can be realized by subdividing each of the two motor channels. In case apparatus 5 is used in a HIPPS-system, three channels for electric motor 8 are preferable.

Each channel of electric motor 8 has a separate sensor, both a separate sensor 10 and a separate sensor 12. Between rotor 11 of electric motor 8 and sensor 12 there is a measuring gear 15, which transmits the rotation of rotor 11 with a reduction to sensor 12. This enables the linear position of the gear unit 9, in this case the ball screw spindle, and thus of the valve stem 4 to be determined.

In principle, it would be possible to provide only one control device 7. However, the two control devices 7 provided in the present embodiment provide a redundant protection for the operation of actuator 6. Furthermore, the two control devices 7 are connected to each other, so that one control device 7 can always take over the control of the electric motor 8, if an error occurs in the other control device 7.

Each of the two control devices 7 has a battery 16 for the electrical emergency supply thereof and for the electrical emergency supply of electric motor 8. In case of a power failure and/or a failure in one of the control devices 7, the energy for electric motor 8 is provided by battery 16. In case of a failure in one of the control devices 7, the energy for electric motor 8 is provided by the battery 16 of the other control device 7. The electric motor 8 is then able to actively drive the valve stem 4 to a safe position, which can be defined by parameters. If, as described above, electric motor 8 is a dual channel motor with each of the two control devices 7 being connected to one of the channels or windings, electric motor 8 can be driven with one channel or winding only.

In an embodiment not shown in the drawings, both control devices 7 can be placed in one joint housing.

Actuator 6 can be configured such that battery 16 buffers any power peaks and thus reduces the power consumption of electric motor 8. In the normal mode, i.e. if there is no power failure, actuator 6 operates valve stem 4 in a way as known from the prior art, i.e. with an external power supply not shown in the drawings. However, battery 16 may supply power to the components of the respective control device 7. Battery 16 can be constantly monitored by means of one of the components of control device 7.

Furthermore, each of the control devices 7 has a logic controller 17, a power amplifier 18, an actuator interface 19 and an input power module 20. Logic controller 17 is used to monitor battery 16, power amplifier 18 provides a 3-phase voltage to electric motor 8, and actuator interface 19 provides interfaces to battery 16, input interfaces, and interfaces to electric motor 8 and inter-channel communication 14.

In Fig. 4 the connection of the valve stem 4 to the electric motor 8 is shown very schematically. The electric motor 8 is coupled to the valve stem 4 via a stem coupling 21, an actuation stem 22, and an anti-rotation means 23 connected to electric motor 8 for preventing the rotation of actuation stem 22 and therefore of valve stem 4.

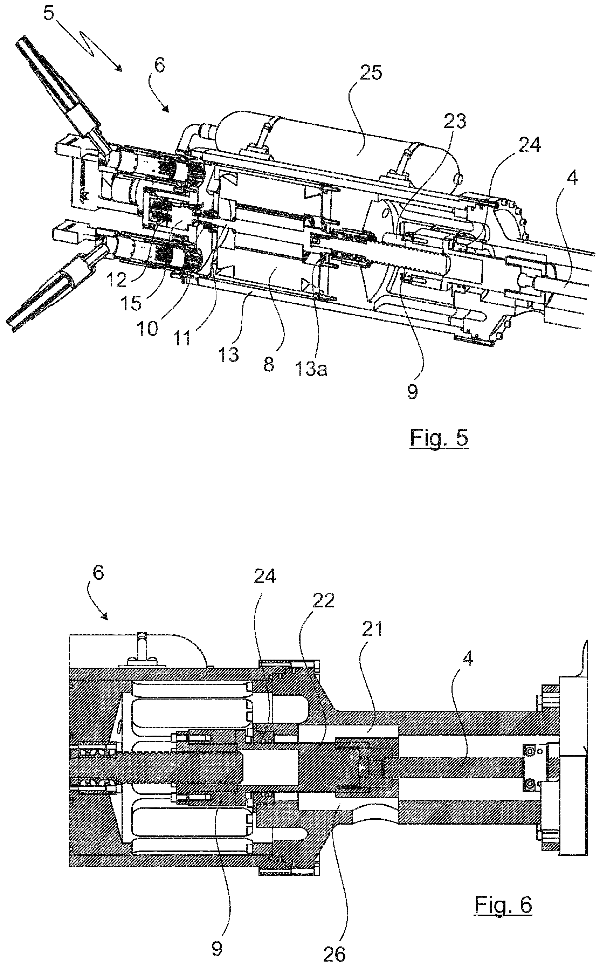

Figures 5 and 6 show apparatus 5 and in particular actuator 6, in more detail. Actuator 6 comprises two separate oil volumes, the first oil volume including valve stem 4 and the second oil volume including electric motor 8. The two separate oil volumes are separated by a seal 24. If, during use, seawater or any substances enter the first oil volume, this will not impact the reliability of the actuator 6, due to the presence of seal 24. Furthermore, a compensator 25 is provided. Compensator 25 has three separate volumes, separated by two bladders. One volume is open to the outside and is therefore filled with seawater during use. The second volume is connected to the first volume of actuator 6 and the third volume is connected to the second volume of actuator 6. All three volumes of compensator 25 are separated by respective bladders or membranes.

In another embodiment, two compensators 25 can being provided. Each of the two compensators 25 are then connected to one of the oil volumes of the actuator 6 respectively. Furthermore, each compensator 25 has two separate volumes, separated by at least one bladder. One volume is open to the outside and is therefore filled with seawater during use. The second volume is connected to one of the first or second volumes of actuator 6.

In Fig. 6 at least one adjustable end-stop 26 in order to limit the linear movement of the valve stem 4 can be seen.

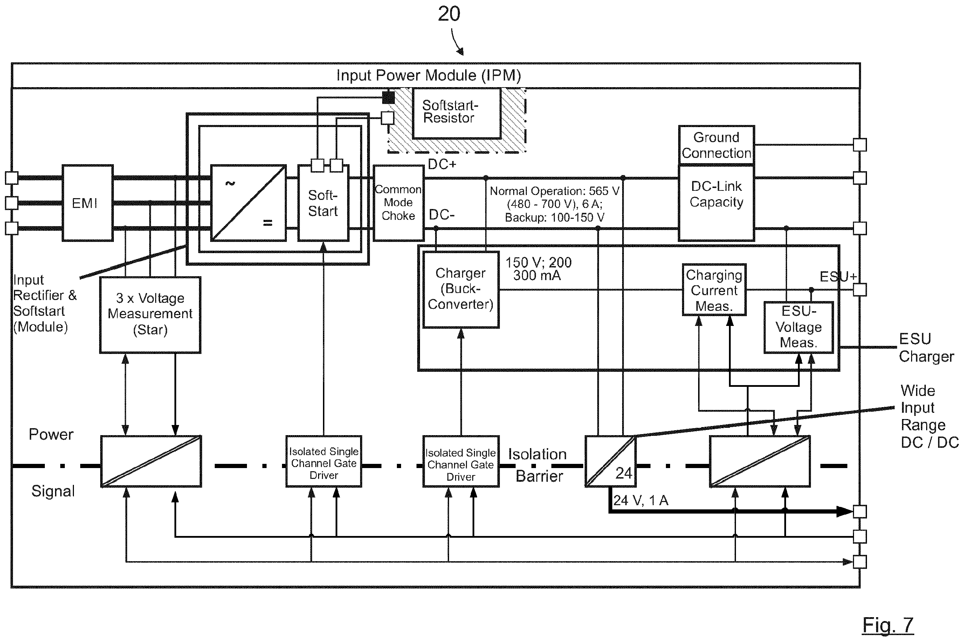

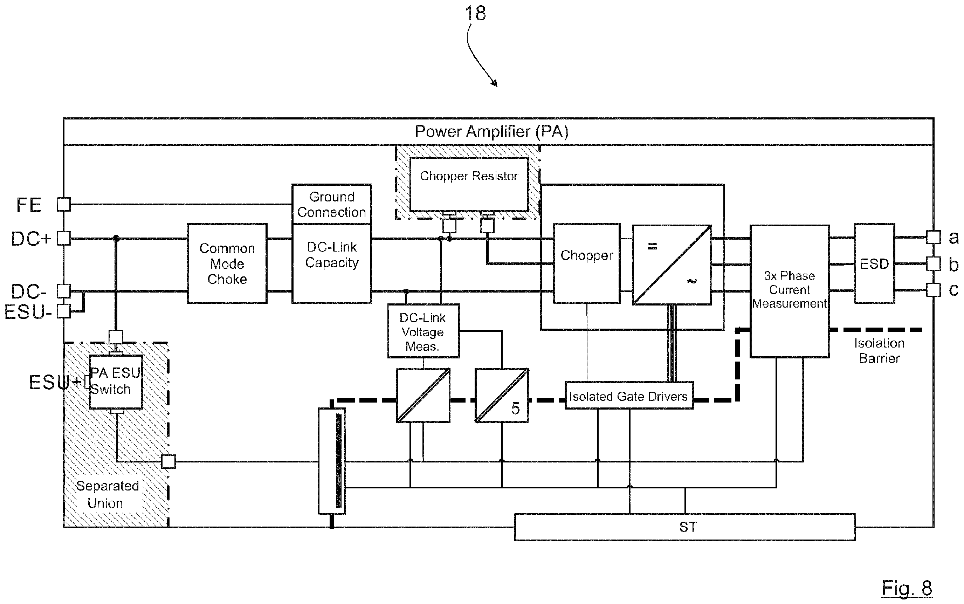

Fig. 7 shows a detailed representation of input power module 20. Fig. 8 shows a detailed view of power amplifier 18.

The above disclosed subject-matter is to be considered illustrative rather than restrictive. The appended claims are intended to cover all modifications, enhancements, and other embodiments which fall within the spirit and scope of the present disclosure. Accordingly, the scope of the present disclosure is to be determined by the broadest permissible interpretation of the following claims and their equivalents, and shall not be restricted or limited by the foregoing detailed description.

## Claims

1. Apparatus (5) for controlling a valve (1), the valve (1) having a valve stem (4), in particular in a subsea environment, comprising:
an actuator (6) having an electric motor (8),
a gear unit (9) for converting a rotational movement generated by the electric motor (8) into a linear movement for driving the valve stem (4),
at least one control device (7) for controlling the electric motor (8), the at least one control device (7) having a battery (16) for the electrical emergency supply thereof and for the electrical emergency supply of the electric motor (8).

2. Apparatus according to claim 1 comprising at least two control devices (7) for controlling the electric motor (8), the control devices (7) being connected to each other.

3. Apparatus according to any one of claims 1 or 2, wherein the electric motor (8) is at least a dual channel motor having a separate winding for each channel, each of the at least two control devices (7) being connected to one channel of the electric motor (8).

4. Apparatus according to any one of claims 1 to 3, wherein the actuator (6) comprises two separate oil volumes separated by a seal (24), and wherein at least one compensator (25) is provided, the at least one compensator (25) having at least two separate volumes separated by at least one bladder and being connected to one of the oil volumes of the actuator (6) respectively, or two compensators (25) being provided, each of the two compensators (25) having at least one bladder and being connected to one of the oil volumes of the actuator (6) respectively.

5. Apparatus according to any one of claims 1 to 4, wherein the electric motor (8) has a predetermined cogging moment which can be used as a brake momentum to currentlessly hold a desired position of the electric motor (8).

6. Apparatus according to any one of claims 1 to 5, wherein the actuator (6) comprises a sensor (10) for sensing the rotational position of a rotor (11) of the electric motor (8) and/or a sensor (12) for sensing the linear position of the valve stem (4).

7. Apparatus according to any one of claims 1 to 6, wherein the at least one control device (7) comprises:
a logic controller (17),
a power amplifier (18),
an actuator interface (19),
an input power module (20), and
the battery (16).

8. Apparatus according to any one of claims 1 to 7, comprising an anti-rotation means (23) for preventing the rotation of the valve stem (4).

9. Apparatus according to any one of claims 1 to 8, wherein the gear unit (9) is a ball screw spindle, a roller screw spindle or a threaded spindle.

10. Apparatus according to any one of claims 1 to 9, comprising at least one adjustable end-stop (26) to limit the linear movement of the valve stem (4).
